# EUROPEAN PATENT APPLICATION

(11) **EP 4 620 738 A1**
(43) Date of publication of application: **24.09.2025**
(21) Application number: 25165072.7
(22) Date of filing: 20.03.2025
(51) Int. Cl.: B60Q 1/50, B60Q 1/26

(54) **SYSTEM AND METHOD FOR THE ACTIVATION OF DEVICES WITH VISUAL WARNING FUNCTIONS ON A WORKING VEHICLE AND WORKING VEHICLE**

(30) Priority: 20.03.2024 IT 202400006256
(71) Applicant: CNH Industrial Italia S.p.A., 10156 Torino (IT)
(72) Inventor: Gastecker, Mario, 10156 Turin (IT); Lahmer, Martin, 10156 Turin (IT); Reichel, Christian, 10156 Turin (IT); Ladinger, Jakob, 10156 Turin (IT); Karner, Jürgen, 10156 Turin (IT)
(74) Representative: CNH Industrial IP Department

(57) **Abstract**

System (1) for the activation of devices with a visual warning function (2) on a working vehicle (3) comprising electronic processing resources (4) configured to: receive outputs relative to an overall size (W) of the working vehicle (3) and at least one between a position of the working vehicle (3) and a dynamics of the working vehicle (3); process the outputs to determine if each said output satisfies a respective proprietary criterion for the activation of the devices with a visual warning function (2); and if each output satisfies the respective proprietary criterion for the activation of the devices with a visual warning function (2), generate a command for activating the devices with a visual warning function (2) and/or provide recommendation to a driver of the working vehicle (3) for activating the devices with a visual warning function (2). In order to process the outputs to determine if each said output satisfies a respective proprietary criterion for the activation of the devices with a visual warning function (2), the electronic processing resources (4) are configured to determine if the output relative to the overall size (W) is higher or equal to a corresponding threshold value (Wₜₕ) and if the output relative to at least one between the position and the dynamics is associated with a geographical position of the working vehicle (3) on a road.

## Description

### TECHNICAL FIELD

The present invention concerns systems and methods for the automatic activation of devices with visual warning functions such as flashing warning lights, here in particular a rotary beacon, on a working vehicle.

The present invention finds its preferred, although not exclusive, application in a vehicle provided with wheels and/or tracks, more in particular working land vehicles, such as agricultural vehicles, e.g. tractors. Reference will be made to this application by way of example below.

### BACKGROUND OF THE INVENTION

As is known, the market of autonomous vehicles and, in general, autonomous driving has been consistently growing in recent years; this also applies in the field of working vehicles, in particular tractors or the like.

A notable feature to consider in view of the requirements for increasingly autonomous driving is the possibility to automatically activate flashing warning lights, i.e. devices with a visual warning function, in particular rotary beacons, on working vehicles and, in general, mobile machinery comprising such flashing warning lights having the necessity to mount such flashing warning lights; this is the case, for examples, of tractors, in particular when combined with any type of implements whose dimensions and size are such that flashing warning lights are requested to be activated by law and according to the homologation into force.

Currently, flashing warning lights are manually activated by operators by operating a dedicated switch situated in the cabin of the same working vehicle.

Therefore, the need is felt to satisfy at least in part the request for a fully automatic activation of the flashing warning lights, which is considered to be an important requirement for upcoming autonomous working vehicles and, in general, mobile machinery. Furthermore, it is also felt the need to provide a recommendation for a human operator, also referred to as user hereinafter, to activate the flashing warning lights.

An aim of the present invention is to satisfy the abovementioned needs in a cost-effective and optimized manner.

### SUMMARY OF THE INVENTION

The aforementioned aim is reached by a system and a method for the automatic activation of flashing warning lights on a working vehicle as claimed in the appended set of claims that are integral part of the present description.

### BRIEF DESCRIPTION OF DRAWINGS

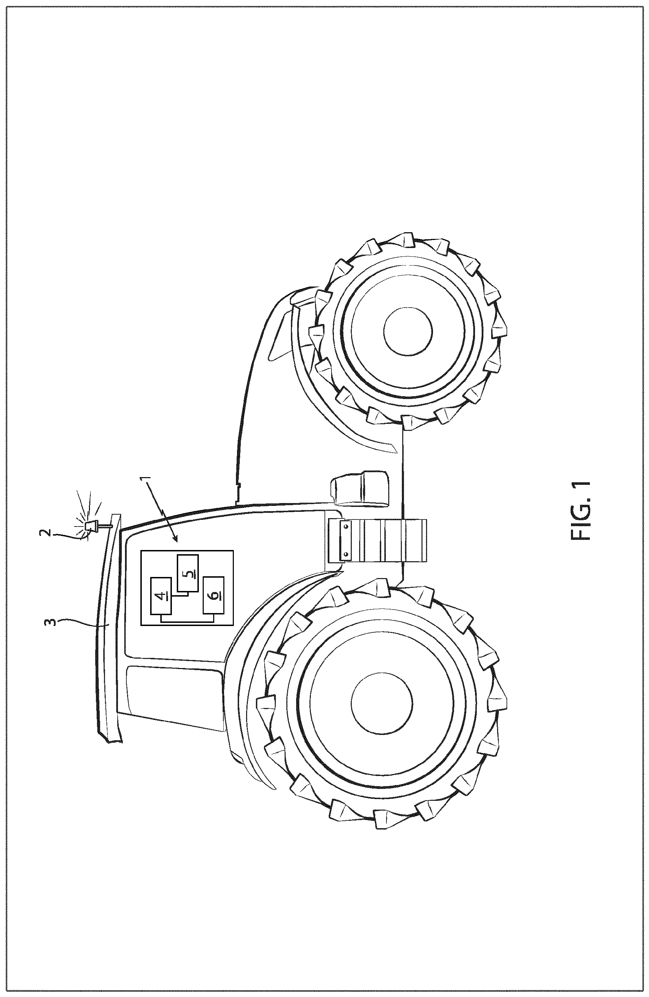

For a better understanding of the present invention, a preferred embodiment is described in the following, by way of a non-limiting example, with reference to the attached drawings wherein Figure 1 schematically shows a block diagram of a system for the automatic activation of flashing warning lights on a working vehicle, as well as the working vehicle comprising the flashing warning lights, according to the present invention.

### DETAILED DESCRIPTION OF THE INVENTION

Figure 1 shows a system 1 for the automatic activation of flashing warning lights or, more generally, devices with a visual warning function 2 on a working vehicle (for example, a tractor) 3; for the sake of simplicity and for a better understanding of the present invention, the flashing warning lights 2 here are in the form of a rotary beacon 2. Furthermore, for the same reasons of simplicity and a better understanding of the present invention, if not specified otherwise, reference will be made to a single working vehicle 3 having a single rotary beacon 2. According to further aspects of the present invention, not described in detail hereinafter, the working vehicle 3 may also comprise multiple rotary beacons 2 or, in general, devices with a visual warning function. In addition, by way of example and without it being limiting to the present invention, the rotary beacon 2 is here attached to the topside of the working vehicle 3 and no further implement is shown; according to further aspect of the present invention, not described in detail hereinafter, the working vehicle 3 may be connected to one or more implements, each conveniently provided with respective rotary beacons 2.

The system 1 comprises electronic processing resources 4 configured to:
- receive outputs relative to an overall size, *e.g.* the overall width W of the working vehicle 3, and at least one between a position of the working vehicle 3 and a dynamics of the working vehicle 3;
- process the outputs to determine if each said output satisfies a respective proprietary criterion for the activation of the rotary beacon 2; and
- if each output satisfies the respective proprietary criterion for the activation of the rotary beacon 2, generate a command for activating the rotary beacon 2 on the working vehicle 3.

Furthermore, in particular in case of non-autonomous vehicles, the electronic processing resources 4 are also configured to provide a recommendation to a user, *e.g.* the driver of the working vehicle 3, for activating the rotary beacon 2.

In particular, in order to process the outputs to determine if each said output satisfies a respective proprietary criterion for the activation of the rotary beacon 2, the electronic processing resources 4 are configured to determine if the output relative to the overall size W is higher or equal to a corresponding threshold value Wₜₕ and if the output relative to at least one between the position and the dynamics is associated with a geographical position of the working vehicle 3 on a road.

In case the working vehicle 3 is not attached to any implement, the electronic processing resources 4 are configured to receive as the overall size W the width of the working vehicle 3. On the other hand, in case one or more implements, each having a respective width, are attached to the working vehicle 3, the overall width is defined as the largest width among the individual machines, *i.e.* the largest width among the working vehicle 3 and any additional implement attached thereto; thus, the electronic processing resources 4 are configured to receive the width of the working vehicle 3 and the respective widths of the one or more implements attached to the working vehicle 3; and determine the overall size Was the largest width among the width of the working vehicle 3 and the widths of the one or more implements attached to the working vehicle 3.

It is furthermore noted that, in case one or more implements are attached to the working vehicle 3, the overall length is defined as the length of the working vehicle 3 added to any additional length given by the implements attached thereto.

According to an aspect of the present invention, the electronic processing resources 4 are of a local type, *e.g.* they are implemented as a local unit, for instance the electronic control unit, ECU, of the working vehicle 3; according to a further and alternative aspect of the present invention, electronic processing resources 4 are of a distributed type, *e.g.,* on nodes in a network, and implementing paradigms such as cloud computing. Without it being limiting to the present invention, the electronic processing resources 4 are here of the local type; more in particular, the electronic processing resources 4 are identified as the ECU of the working vehicle 3 and, thus, referred to with the same reference number, *i.e.* ECU 4.

According to an aspect of the present invention, in particular in the case in which the working vehicle 3 is not connected to one or more implements, the ECU 4 is configured to receive the overall size W of the working vehicle 3 via communication means, for example implementing an ISOBUS protocol, from remote electronic processing resources (not shown), for example from a manufacturer's terminal or server.

According to a further aspect of the present invention, when at least one implement is included, the overall size W of the working vehicle 3 is either communicated via communication means, for example implementing ISOBUS, to the ECU 4 when such communication means are provided in the implements or determined on the basis of an output generated by a sensory system (not shown) of the at least one implement which is in communication with the ECU 4; in particular, in the latter case, the sensory system of the at least one implement comprises at least one image sensor, for example a camera, configured to acquire images of the surrounding environment and, in particular, of the working vehicle 3 and of the implement itself, thereby implementing a camera detection of the same. Such outputs are then transmitted to the ECU 4, e.g. via a dedicated BUS, in particular the abovementioned communication means or dedicated interface systems, and processed by the latter to the determine the overall width of the working vehicle 3.

The system 1 further comprises a sensory system 5 in communication with the ECU 4 and configured to output image data indicative of the position of the working vehicle 3, in particular by means of dedicated image sensor(s) (not shown); in further detail, image sensors are configured to acquire images of the surrounding environment, so as to locate the working vehicle 3, and process such images to generate image data relative to said images.

The system 1 further comprises a geolocalization system 6 in communication with the ECU 4 and configured to output geolocalization data indicative of the geographical position of the working vehicle 3. Therefore, either the sensory system 5 and/or the geolocalization system 6 are configured to provide information relative to where the working vehicle 3 is located, namely if it is on a field or on the road, thereby enabling the ECU 4 to determine whether to activate the rotary beacon 2 to abide to specific law requirements or not, as described in further detail in the following paragraphs.

According to an aspect of the present invention, both the sensory system 5 and the geolocalization system 6 are integrated in the working vehicle 3; furthermore, the sensory system 5 and the geolocalization system 6 are in communication with the ECU 4 by means of, *e.g.,* a dedicated BUS (not shown) for allowing exchange of data, in particular from the sensory system 5 and the geolocalization system 6 to the ECU 4.

According to an aspect of the present invention, the geolocalization system 6 is satellite-based and comprises a GNSS receiver capable of receiving, specifically through a GNSS antenna, radio signals, known as Signals in Space (SIS) transmitted by a constellation of satellites of a Global Navigation Satellite System, GNSS and determine, based on the Signals in Space received, position data indicative of the absolute geographic position, in terms of latitude, longitude, altitude (elevation), direction and time of the vehicle on which the GNSS receiver is installed.

In order to process the outputs to determine if each said output satisfies the respective proprietary criterion for the activation of the rotary beacon 2, the ECU 4 is configured to determine if the output relative to the position of the working vehicle 3, which is determined on the basis of either the image data outputted by the sensory system 5 and/or the geolocalization data outputted by the geolocalization system 6, is associated with a geographical position of the working vehicle 3 either on a road or on a field, *i.e.* if the working vehicle 3 is moving on the road and, thus, the activation of the rotary beacon 2 is required. In particular, considering the image data outputted by the sensory system 5, the ECU 4 is configured to carry out image processing so as to determine the nature of the environment in which the working vehicle 3 is moving, *i.e.* to determine whether the working vehicle 3 is on a road or in another environment, *e.g.,* on a field.

In addition, the sensory system 5 further comprises vehicle dynamics sensors (for example, a speedometer) configured to output data relative to the dynamics of the working vehicle 3, in particular data relative to the speed v of the working vehicle 3, to determine the position of the working vehicle 3. Therefore, in order to process the outputs to determine if each said output satisfies the respective proprietary criterion for the activation of the rotary beacon 2, the ECU 4 is further configured to determine if the data relative to the dynamics of the working vehicle 3 is within a confidentiality range, namely if the speed v of the working vehicle 3 is above a pre-defined trigger value, *e.g.* 20 km/h, *i.e.* the values of speed v at which generally a working vehicle 3 proceeds on a road, thereby verifying if the working vehicle 3 is on the road or not.

According to a further aspect of the present invention, not described in detail hereinafter, the vehicle dynamics sensors of the sensory system 5 are further configured to output data relative to the longitudinal an/or the lateral acceleration of the working vehicle 3 to determine the position of the latter. Therefore, similarly to what has been discussed for the speed v of the same working vehicle 3, in order to process the outputs to determine if each said output satisfies the respective proprietary criterion for the activation of the rotary beacon 2, the ECU 4 is further configured to determine if the longitudinal and/or lateral acceleration of the working vehicle 3 are above a pre-defined trigger value, i.e. the values of the longitudinal and/or lateral accelerations at which generally a working vehicle 3 proceeds on a road, thereby verifying if the working vehicle 3 is on the road or not.

In view of the above, in order to generate a command for activating the rotary beacon 2 on the working vehicle 3 if each output satisfies the respective proprietary criterion for the activation of the rotary beacon 2, the ECU 4 is configured to generate said command if:
- the working vehicle 3 has an overall size W that is higher or equal to the threshold value Wₜₕ; and
- the position of the working vehicle 3, which is determined on the basis of the image data, the geolocalization data and/or the data relative to the dynamics of the working vehicle 3, is determined to be a position on a road.

According to a further aspect of the present invention, the ECU 4 is configured to generate a notification, *e.g.* a visual and/or audio notification, indicative of the activation and, conveniently, the deactivation of the rotary beacon 2 to be transmitted to a user, for example on a user terminal (*e.g.* a display in communication with the ECU 4) located in the cabin of the working vehicle 3; according to a further embodiment of the present invention, the ECU 4 is configured to generate a notification indicative of the activation and the deactivation of the rotary beacon 2 to be transmitted to a remote server, for example to notify a user of the correct operation of the system 1. According to a further aspect of the present invention, the ECU 4 is configured to display the position of the working vehicle 3 on a digital map, the latter to be shown for example on the user terminal (*i.e.* the display in the cabin of the working vehicle 3) for the driver, thereby (also) visually informing the latter.

In view of the foregoing, the advantages of the present system and method according to the invention are apparent.

In particular, given that, as anticipated above, a fundamental part to operate the working vehicle 3 (or any working vehicle and, in general, mobile machinery of similar type) autonomously on the road with an implement attached is to activate the flashing warning lights 2 automatically, the present invention allows to use different parameters, *i.e.* the overall size and the position, the latter being determined on the basis of different types of data (image data, geolocalization data and/or data relative to the dynamics of the working vehicle 3), to enable the automatic activation of the flashing warning lights 2 without the intervention of the driver or any other user, *e.g.* a remote user connected to the working vehicle 3, in particular to the ECU 4 of the same.

Therefore, through a combination of the abovementioned parameters, it is possible to automatically and without any further human intervention to fulfil any requirements needed for allowing a working vehicle 3 to transit on the road.

Furthermore, the present invention allows to assist a user, namely the driver, in reminding about the activation/deactivation of the flashing warning lights 2 via a notice on a user terminal, *e.g.* a display situated in the cabin of the same working vehicle 3, while driving on the road. Therefore, the present invention is particularly advantageous in case of both autonomous and non-autonomous vehicles, since, in the former case, the abovementioned system and method allow an automatic activation of the flashing warning lights 2 and, in the latter case, provide recommendations for the driver for activating the flashing warning lights 2.

It is clear that modifications can be made to the described system and method which do not extend beyond the scope of protection defined by the claims.

For example, rotary beacons similar to the flashing warning lights 2 to be activated may be attached to every implement where it is necessary in terms of size; therefore, the activation will depend on the overall size of the working vehicle 3, implements included, or, according to further possible implementations of the present invention, to the width of the implement whose rotary beacons have to be activated due to the width requirement.

## Claims

1. System (1) for the automatic activation of devices with a visual warning function (2) on a working vehicle (3) comprising electronic processing resources (4) configured to:
- receive outputs relative to an overall size (W) of the working vehicle (3) and at least one between a position of the working vehicle (3) and a dynamics of the working vehicle (3);
- process the outputs to determine if each said output satisfies a respective proprietary criterion for the activation of the devices with a visual warning function (2); and
- if each output satisfies the respective proprietary criterion for the activation of the devices with a visual warning function (2), generate a command for activating the devices with a visual warning function (2) and/or provide recommendation to a driver of the working vehicle (3) for activating the devices with a visual warning function (2),
wherein, in order to process the outputs to determine if each said output satisfies a respective proprietary criterion for the activation of the devices with a visual warning function (2), the electronic processing resources (4) are configured to determine if the output relative to the overall size (W) is higher or equal to a corresponding threshold value (Wₜₕ) and if the output relative to at least one between the position and the dynamics is associated with a geographical position of the working vehicle (3) on a road.

2. The system (1) according to claim 1, wherein the electronic processing resources (4) are configured to receive as the overall size (W) the width of the working vehicle (3).

3. The system (1) according to claim 2, wherein the working vehicle (3) is attached to one or more implements, each having a respective width,
wherein the electronic processing resources (4) are configured to receive the width of the working vehicle (3) and the respective widths of the one or more implements attached to the working vehicle (3),
and wherein the electronic processing resources (4) are configured to determine the overall size (W) as the largest width among the width of the working vehicle (3) and the widths of the one or more implements attached to the working vehicle (3).

4. The system (1) according to any one of the preceding claims and further comprising at least one between:
- a sensory system (5) configured to output image data indicative of the position of the working vehicle (3); and
- a geolocalization system (6) configured to output geolocalization data indicative of the geographical position of the working vehicle (3),
and wherein, in order to process the outputs, the electronic processing resources (4) are further configured to determine if the output relative to the position of the working vehicle determined on the basis of either the image data and/or the geolocalization data is associated with a position of the working vehicle (3) either on a road or on a field.

5. The system (1) according to claim 4, wherein the sensory system (5) is further configured to output data relative to the dynamics of the working vehicle (3) to determine the position of the working vehicle (3),
and wherein, in order to process the outputs, the electronic processing resource (4) are further configured to determine if the output relative to the position of the working vehicle (3) determined on the basis of the data relative to the dynamics of the working vehicle (3) is associated with a position of the working vehicle (3) either on a road or on a field.

6. The system (1) according to claim 5, wherein the data relative to the dynamics of the working vehicle (3) comprises data relative to the speed (v) of the working vehicle (3),
and wherein, in order to determine if the output relative to the position of the working vehicle (3) determined on the basis of the data relative to the dynamics of the working vehicle (3) is associated with a position of the working vehicle (3) either on a road or on a field, the electronic processing resources (4) are configured to determine if the data relative to the speed (v) is above a pre-defined trigger value.

7. The system (1) according to any one of the preceding claims, wherein the electronic processing resources (4) are further configured to generate a notification indicative of the activation of the devices with a visual warning function (2) on the working vehicle (3).

8. Method for the automatic activation of a devices with a visual warning function (2) on a working vehicle (3) comprising:
- acquiring outputs relative to an overall size (W) of the working vehicle (3) and at least one between a position of the working vehicle (3) and a dynamics of the working vehicle (3);
- processing the outputs to determine if each said output satisfies a respective proprietary criterion for the activation of the devices with a visual warning function (2); and
- if each output satisfies the respective proprietary criterion for the activation of the devices with a visual warning function (2), generating a command for activating the devices with a visual warning function (2) on the working vehicle (3) and/or providing recommendation to a driver of the working vehicle (3) for activating the devices with a visual warning function (2),
wherein the step of processing the outputs comprises determining if the output relative to the overall size (W) is higher or equal to a corresponding threshold value (Wₜₕ) and if the output relative to at least one between the position and the dynamics is associated with a geographical position of the working vehicle (3) on a road.

9. The method according to claim 8, wherein the step of acquiring outputs also comprises acquiring as the overall size (W) the width of the working vehicle (3).

10. The method according to claim 9, wherein the working vehicle (3) is attached to one or more implements, each having a respective width,
and wherein the step of acquiring also comprises:
- acquiring the width of the working vehicle (3) and the respective widths of the one or more implements attached to the working vehicle (3); and
- determining the overall size (W) as the largest width among the width of the working vehicle (3) and the widths of the one or more implements attached to the working vehicle (3).

11. The method according to any one of claims 8-10, wherein the step of acquiring the outputs comprises at least one of the following:
- acquiring image data indicative of the position of the working vehicle (3) from a sensory system (5); and
- acquiring geolocalization data indicative of the geographical position of the working vehicle (3) from a geolocalization system (6),
and wherein the step of processing the outputs comprises determining if the output relative to the position of the working vehicle (3) determined on the basis of either the image data and/or the geolocalization data is associated with a position of the working vehicle (3) either on a road or on a field.

12. The method according to any one of claims 10 or 11 and further comprising acquiring data relative to the dynamics of the working vehicle (3) to determine the position of the working vehicle (3),
and wherein the step of processing the outputs comprises determining if the output relative to the position of the working vehicle (3) determined on the basis of the data relative to the dynamics of the working vehicle (3) is associated with a position of the working vehicle (3) either on a road or on a field.

13. The method according to claim 12, wherein the data relative to the dynamics of the working vehicle (3) comprises data relative to the speed (v) of the working vehicle (3),
and wherein the step of determining if the output relative to the position of the working vehicle (3) determined on the basis of the data relative to the dynamics of the working vehicle (3) is associated with a position of the working vehicle (3) either on a road or on a field comprises determining if the data relative to the speed (v) is above a pre-defined trigger value.

14. The method according to any one of claims 8-13 and further comprising generating a notification indicative of the activation of the devices with a visual warning function (2) on the working vehicle (3).

15. Working vehicle (3) comprising a rotary beacon (2) and configured to be attached to one or more implements, the working vehicle (3) being configured to be activated by a system (1) for the automatic activation of devices with a visual warning function (2) on a working vehicle (3) according to any one of claims 1-7; the system (1) for the automatic activation of the devices with a visual warning function (2) on the working vehicle (3) being configured to carry out the method according to any one of claims 8-14.
